# EUROPÄISCHE PATENTSCHRIFT

(11) **EP 1 409 593 B1**
(45) Veröffentlichungstag und Bekanntmachung des Hinweises auf die Patenterteilung: **07.09.2005**
(21) Anmeldenummer: 02754796.7
(22) Anmeldetag: 29.06.2002
(51) Int. Cl.: C09B 67/20, C09D 17/00

(54) **WASSERBASIERENDE PIGMENTDISPERSIONEN, IHRE HERSTELLUNG UND VERWENDUNG**
WATER-BASED PIGMENT DISPERSIONS, THE PRODUCTION THEREOF AND THE USE OF THE SAME
DISPERSIONS DE PIGMENTS A BASE D'EAU, LEUR PRODUCTION ET LEUR UTILISATION

(30) Priorität: 11.07.2001 DE 10133641
(43) Veröffentlichungstag der Anmeldung: 21.04.2004
(73) Patentinhaber: Clariant GmbH, 65929 Frankfurt am Main (DE)
(72) Erfinder: HARZ, Andreas, 65824 Schwalbach (DE); WIHAN, Lothar, 79618 Rheinfelden (DE); WINTER, Martin, Alexander, 65779 Kelkheim (DE); PFRENGLE, Andreas, 55411 Bingen (DE)
(74) Vertreter: Hütter, Klaus
(86) Internationale Anmeldenummer: PCT/EP2002/007201
(87) Internationale Veröffentlichungsnummer: WO 2003/006556

(56) Entgegenhaltungen:
- EP-A- 0 735 109
- EP-A- 0 764 701
- DATABASE WPI Section Ch, Week 199104 Derwent Publications Ltd., London, GB; Class A11, AN 1991-027032 XP002219975 & JP 02 298516 A (KANEBO LTD), 10. Dezember 1990 (1990-12-10)
- DATABASE WPI Section Ch, Week 198724 Derwent Publications Ltd., London, GB; Class A87, AN 1987-168573 XP002219976 & SU 1 265 227 A (COTTON PAPER IND), 23. Oktober 1986 (1986-10-23)
- DATABASE WPI Section Ch, Week 200019 Derwent Publications Ltd., London, GB; Class A84, AN 2000-218198 XP002219977 & JP 2000 044862 A (PENTEL KK), 15. Februar 2000 (2000-02-15)
- DATABASE WPI Section Ch, Week 199428 Derwent Publications Ltd., London, GB; Class A84, AN 1994-230770 XP002219978 & JP 06 166845 A (PENTEL KK), 14. Juni 1994 (1994-06-14)
- DATABASE WPI Section Ch, Week 199251 Derwent Publications Ltd., London, GB; Class A14, AN 1992-419598 XP002219979 & JP 04 314769 A (CITIZEN WATCH CO LTD), 5. November 1992 (1992-11-05)

## Beschreibung

Gegenstand der vorliegenden Erfindung sind wasserbasierende Pigmentpräparationen, Verfahren zu ihrer Herstellung, ihre Verwendung zum Färben vornehmlich von Dispersionsanstrichfarben, und Lackfarben.

Es ist eine Vielzahl von Pigmentdispersionen für die verschiedensten Einsatzgebiete bekannt, welche als Dispergiermittel anionische und/oder nichtionogene Hilfsmittel enthalten. In der Regel handelt es sich bei diesen Hilfsmitteln um Alkylaryl-Verbindungen, deren Oxalkylierungs- und oder Sulfonierungsprodukte. Diese Dispergiermittel, die sich zum Dispergieren von Feststoffen in wässrigen Systemen eignen, sind jedoch nicht in der Lage, bei Anwesenheit von Wasser als alleinigem flüssigem Medium, ein Pigment so zu präparieren, dass die erhaltene Präparation alle gewünschten Eigenschaften erfüllt. So können während des Dispergiervorgangs und auch danach Flockungserscheinungen und Sedimentbildung auftreten, die zu Viskositätsänderungen des Anwendungsmediums, zu Farbtonänderungen und Verlusten an Farbstärke, Deckvermögen, Glanz, Homogenität, Brillanz sowie schlecht reproduzierbaren Farbtönen und zu Ablaufneigung im Falle von Lacken bei den gefärbten Materialien führen. Des weiteren leidet die An- und Eintrockenbeständigkeit erheblich. Herkömmliche Pigmentpräparationen enthalten daher neben Dispergiermittel, Netzmittel, Verdicker, Konservierungsmittel, Viskositätsstabilisatoren und Füllstoffen auch ein Retentionsmittel, welches dafür sorgt, dass das Produkt nicht eintrocknet oder noch vor der Verwendung antrocknet. In der Regel wurde für diesen Zweck Ethylenglykol oder Propylenglykol eingesetzt. Aus Umweltschutzgründen verbietet sich jedoch die Verwendung flüchtiger Glykole wie Propandiol, 1,2-Monoethylenglykol oder Diethylenglykol.

In der EP 0 735 109 werden als Alternative für Ethylenglykol bzw. Propylenglykol, Polyetherpolyole eingesetzt, die zwar bezüglich der An- und Eintrockenbeständigkeit recht gute Ergebnisse zeigen, deren Scheuer- und Abriebbeständigkeit im Anwendungsmedium jedoch signifikante Defizite aufweisen.

In den englischen Zusammenfassungen des WPI (Derwent) mit den Nummern 1991-027 032 und 1987-168 573 werden Pigment-zusammensetzungen enthaltend Monoalkylpolyethylen glykolether offenbart.

Der vorliegenden Erfindung lag daher die Aufgabe zugrunde, wässrige Pigmentpräparationen bereitzustellen, die eine gute An- und Eintrocknungsbeständigkeit aufweisen, ökotoxikologisch einwandfrei sind und im Anwendungsmedium eine hohe Scheuer- und Abriebbeständigkeit besitzen.

Es zeigte sich, dass alpha-Methyl-omega-hydroxy-polyethylenglykolether als Retentionsmittel die vorstehend genannte Aufgabe löst.

Gegenstand der vorliegenden Erfindung ist eine Pigmentdispersion, bestehend im wesentlichen aus
a) mindestens einem organischen oder anorganischen Pigment oder einer Kombination davon,
b) einem alpha-Methyl-omega-hydroxy-polyethylenglykolether mit einer mittleren Molmasse von 250 bis 1000 g/mol,
c) zur Herstellung wässriger Pigmentdispersionen üblichen Dispergatoren,
d) Wasser und
e) gegebenenfalls weiteren üblichen Zusatzstoffen.

Bevorzugte Pigmentdispersionen sind solche, bestehend im wesentlichen aus
a) 10 bis 80 Gew.-%, insbesondere 20 bis 70 Gew.-%, mindestens eines organischen oder anorganischen Pigments;
b) 1 bis 50 Gew.-%, besonders bevorzugt 2 bis 30 Gew.-%, ganz besonders bevorzugt 4 bis 20 Gew.-%, insbesondere 5 bis 10 Gew.-%, eines alpha-Methyl-omega-hydroxy-polyethylenglykolether mit einer mittleren Molmasse zwischen 250 und 1000 g/mol, besonders bevorzugt 400 und 600 g/mol, insbesondere 470 und 530 g/mol;
c) 2 bis 25 Gew.-%, insbesondere 3 bis 15 Gew.-%, eines üblichen Dispergators,
d) 5 bis 80 Gew.-%, insbesondere 10 bis 60 Gew.-%, Wasser;
e) 0 bis 5 Gew.-% üblicher Zusatzstoffe,
wobei die Gewichtsprozente jeweils auf das Gesamtgewicht der Pigmentdispersion bezogen sind.

Beispiele für organische Pigmente im Sinne der Erfindung sind Monoazopigmente, Disazopigmente, verlackte Azopigmente, Triphenylmethanpigmente, Thioindigopigmente, Thiazinindigopigmente, Perylenpigmente, Perinonpigmente, Anthanthronpigmente, Diketopyrrolopyrrolpigmente, Dioxazinpigmente, Chinacridonpigmente, Phthalocyaninpigmente, Isoindolinonpigmente, Isoindolinpigmente, Benzimidazolonpigmente, Naphtholpigmente und Chinophthalonpigmente, sowie saure bis alkalische Ruße aus der Gruppe Furnaceruße oder Gasruße.

Geeignete anorganische Pigmente sind beispielsweise Titandioxide, Zinksulfide, Eisenoxide, Chromoxide, Ultramarin, Nickel- oder Chromantimontitanoxide, Cobaltoxide sowie Bismutvanadate.
Zu erwähnen sind außerdem Dispersionen, die als Feststoffe beispielsweise feinteilige Erze, Mineralien, schwer- oder unlösliche Salze, Wachs- oder Kunststoffteilchen, Pflanzenschutz- und Schädlingsbekämpfungsmittel, optische Aufheller und Farbstoffe enthalten.

Der erfindungsgemäß eingesetzte alpha-Methyl-omega-hydroxy-polyethylenglykolether ist bevorzugt eine Verbindung der Formel (I)

H₃C - O-[-CH₂CH₂-O-]ₘ-H (I)

mit m = 9 bis 35 (im Durchschnitt).

Bevorzugte alpha-Methyl-omega-hydroxy-polyethylenglykolether im Sinne der vorliegenden Erfindung können noch Anteile von nichtmethyliertem Polyglykolether enthalten. Derartige Produkte sind kommerziell erhältlich und haben eine Hydroxylzahl von 50 bis 200 mg/g, insbesondere 106 bis 119 mg/g, KOH (ASTM D4272-94d).

Als Komponente c) eignen sich anionische, kationische und nichtionische grenzflächenaktive Verbindungen. Besonders bewährt haben sich Dispergiermittel, die eine oder mehrere mittel- oder langkettige Kohlenwasserstoffketten besitzen. Von der Vielzahl der Verbindungen soll an dieser Stelle nur eine Auswahl aufgeführt werden, ohne jedoch die Anwendbarkeit der erfindungsgemäßen Verbindungen auf diese Beispiele einzuschränken. Beispiele sind Alkylsulfate, Alkylsulfonate, Alkylphosphate, Alkylbenzolsulfonate wie Laurylsulfat, Stearylsulfat, Dodecylsulfonate, Octadecylsulfate, Dodecylsulfonate, Kondensationsprodukte aus Fettsäure und Taurin oder Hydroxyethansulfonsäure, Alkoxylierungsprodukte von Alkylphenolen, Ricinusölkolophoniumestern, Fettalkoholen, Fettaminen, Fettsäuren, und Fettsäureamiden, Umsetzungsprodukte aus Nonylphenol und kürzerkettigen, substituierten Alkylphenolen sowie deren polymeren Derivaten, z.B. Formaldehyd-Kondensationsprodukten sowie polymere Verbindungen wie z.B. Polyacrylaten und deren Oxalkylate.

Als übliche Zusatzstoffe kommen Antiabsetzmittel, Netzmittel, Konservierungsmittel, Viskositätsstabilisatoren und Additive, welche die Rheologie beeinflussen, in Betracht.

Gegenstand der Erfindung ist auch ein Verfahren zur Herstellung der erfindungsgemäßen Pigmentdispersionen, wobei die Komponente (a) in Form von Pulver, Granulat oder wässrigen Presskuchen in Gegenwart von Wasser sowie der Komponenten (b) und (c) in an sich üblicher Weise dispergiert wird, anschließend gegebenenfalls Wasser (d) und/oder (e) zugemischt und die erhaltene wässrige Pigmentdispersion mit Wasser auf die gewünschte Konzentration eingestellt wird.
Vorzugsweise werden die Komponenten (b), (c), (d) und (e) zunächst vermischt, die Komponente (a) in die vorgelegte Mischung eingerührt und je nach Kornhärte der eingesetzten Pigmente mit Rührwerken, Dissolvern, Rotor-Stator-Mühlen, Kugelmühlen, Rührwerkskugelmühlen wie Sand- und Perlmühlen, Schnellmischern, Knetapparaturen oder Hochleistungsperlmühlen dispergiert.

Die auf diese Weise hergestellten flüssig bis pastösen Pigmentpräparationen sind zum Färben natürlicher sowie synthetischer Materialien geeignet. Sie zeichnen sich durch hohe Flockungs- und Lagerstabilität, Farbstärke, Glanz, Homogenität, Brillanz sowie hervorragende Scheuer- und Abriebbeständigkeit aus. Besonders wertvoll sind sie für die Pigmentierung von Anstrich- und Dispersionsfarben, Dispersionslacken, für Druckfarben, beispielsweise Textildruck-, Flexodruck- oder Tiefdruckfarben, für Tapetenfarben, für wasserverdünnbare Lacke, für Holzschutzsysteme, für Viskose-Spinnfärbung, für Lacke, für Wurstdärme, für Saatgut, für Glasflaschen, für die Massefärbung von Dachziegeln, für Putze, für Holzbeizen, für Papiermassen, für Buntstiftminen, Faserschreiber, Tuschen, Pasten für Kugelschreiber, Kreiden, Wasch- und Reinigungsmittel, Schuhpflegemittel, Einfärbung von Latex-Produkten, Schleifmitteln sowie zum Einfärben von Kunststoffen und hochmolekularen Materialien.
Außerdem eignen sich die erfindungsgemäßen Pigmentdispersionen als Farbmittel in elektrophotographischen Tonern und Entwicklern, wie z.B. Ein- oder Zweikomponentenpulvertonern (auch Ein- oder Zweikomponenten Entwickler genannt), Magnettonern, Flüssigtonern, Polymerisationstonern sowie weiteren Spezialtonern.
Des weiteren sind die erfindungsgemäßen Pigmentdispersionen geeignet, als Farbmittel in Ink-Jet Tinten auf wässriger und nichtwässriger Basis, sowie in solchen Tinten, die nach dem Hot-melt Verfahren arbeiten oder auf Mikroemulsionen basieren.

Die erfindungsgemäßen Pigmentdispersionen sind in jedem Verhältnis mit Wasser mischbar und zeichnen sich gegenüber herkömmlichen Pigmentdispersionen durch eine hervorragende Flockungs- sowie Lagerstabilität in zahlreichen wässrigen Dispersionsfarben aus. Werden zur Herstellung der Pigmentdispersionen Additive verwendet, die mit hydrophoben Lackbindemittel-Systemen kompatibel sind, so lassen sich auch in hydrophoben Medien flockungsstabile Dispersionen herstellen. Hervorzuheben sind insbesondere die guten rheologischen Eigenschaften sowie die ausgezeichnete Verteilbarkeit in unterschiedlichen Anwendungsmedien.

In den nachstehenden Beispielen bedeuten Teile Gewichtsteile.
Die Scheuer- und Abriebbeständigkeit wurde nach DIN 53778 bzw. DIN EN 13300 geprüft:
Die zu testende Dispersionsfarbe wird auf eine Leneta-Folie aufgetragen und getrocknet. Der getrocknete Probenanstrich wird in einer festgelegten Scheuereinrichtung unter definierten Bedingungen mit einer hin- und hergehenden Scheuerbürste nass gescheuert. Sind zwei Spuren auf einer Länge von mindestens 10 cm zusammenhängend bis auf den Untergrund durchgescheuert, wird der Versuch beendet und die Scheuerzahl (Doppelbürstenstriche) notiert.

### Beispiel 1:

48 Teile C.I. Pigment Gelb 74, 8 Teile eines Polyphenoloxalkylats, 7,5 Teile alpha-Methyl-omega-hydroxy-polyethylenglykolether (Mv 470 - 530 g/mol), 0,6 Teile Konservierungsmittel sowie 35,9 Teile entsalztes Wasser werden bei 30 bis 40°C mittels einer Perlmühle (Fa. Drais) mit 280 Teilen Zirkonoxidperlen (d = 1 mm) gemahlen. Anschließend werden die Mahlkörper abgetrennt und die Pigmentpräparation isoliert.
Die Pigmentpräparation hat eine hohe Farbstärke mit sehr reinem Farbton, erweist sich als gut fließfähig und lagerstabil, d.h. die Probe bleibt trotz der Warmlagerung für 5 Wochen bei 50°C gut fließfähig.
Man erzielt eine Abriebbeständigkeit von 900 Doppelbürstenstrichen nach 28 Tagen Trocknungszeit, wobei eine Präparation des gleichen Pigmentes unter Verwendung von Propylenglykol anstelle von alpha-Methyl-omega-hydroxy-polyethylenglykolether eine Abriebbeständigkeit von nur 800 Doppelbürstenstrichen nach 28 Tagen Trockenzeit zeigt.

### Beispiel 2:

47 Teile C.I. Pigment Rot 112, 10 Teile Styrylphenyloxethylat, 7,5 Teile alpha-Methyl-omega-hydroxy-polyethylenglykolether (Mv 470 - 530 g/mol), 0,6 Teile Konservierungsmittel sowie 34,9 Teile entsalztes Wasser werden bei 30 bis 40°C mittels einer Perlmühle (Fa. Drais) mit 280 Teilen Zirkonoxidperlen (d = 1 mm) gemahlen. Anschließend werden die Mahlkörper abgetrennt und die Pigmentpräparation isoliert.
Die Pigmentpräparation hat eine hohe Farbstärke mit sehr reinem Farbton, erweist sich als gut fließfähig und lagerstabil, d.h. die Probe bleibt trotz der Warmlagerung für 5 Wochen bei 50°C gut fließfähig.

### Beispiel 3:

50 Teile C.I. Pigment Gelb 1, 8 Teile Styrylphenylethoxylat, 7,5 Teile alpha-Methyl-omega-hydroxy-polyethylenglykolether (Mv 470 - 530 g/mol), 0,6 Teile Konservierungsmittel sowie 33,9 Teile entsalztes Wasser werden bei 30 bis 40°C mittels einer Perlmühle (Fa. Drais) mit 280 Teilen Zirkonoxidperlen (d = 1 mm) gemahlen. Anschließend werden die Mahlkörper abgetrennt und die Pigmentpräparation isoliert.
Die Pigmentpräparation hat eine hohe Farbstärke mit sehr reinem Farbton, erweist sich als gut fließfähig und lagerstabil, d.h. die Probe bleibt trotz der Warmlagerung für 5 Wochen bei 50°C gut fließfähig.

### Beispiel 4:

40 Teile C.I. Pigment Schwarz 7, 8 Teile Styrylphenyloxethylat, 3 Teile Polyphenoloxalkylat, 7,5 Teile alpha-Methyl-omega-hydroxy-polyethylenglykolether (Mv 470 - 530 g/mol), 0,6 Teile Konservierungsmittel sowie 40,9 Teile entsalztes Wasser werden bei 30 bis 40°C mittels einer Perlmühle (Fa. Drais) mit 280 Teilen Zirkonoxidperlen (d = 1 mm) gemahlen. Anschließend werden die Mahlkörper abgetrennt und die Pigmentpräparation isoliert.
Die Pigmentpräparation hat eine hohe Farbstärke mit sehr reinem Farbton, erweist sich als gut fließfähig und lagerstabil, d.h. die Probe bleibt trotz der Warmlagerung für 5 Wochen bei 50°C gut fließfähig.

### Beispiel 5:

45 Teile C.I. Pigment Blau 15:3, 13 Teile Arylpolyglykolether, 7,5 Teile alpha-Methyl-omega-hydroxy-polyethylenglykolether (Mv 470 - 530 g/mol), 5 Teile Glyzerin,
0,6 Teile Konservierungsmittel sowie 28,9 Teile entsalztes Wasser werden bei 30 bis 40°C mittels einer Perlmühle (Fa. Drais) mit 280 Teilen Zirkonoxidperlen (d = 1 mm) gemahlen. Anschließend werden die Mahlkörper abgetrennt und die Pigmentpräparation isoliert.
Die Pigmentpräparation hat eine hohe Farbstärke mit sehr reinem Farbton, erweist sich als gut fließfähig und lagerstabil, d.h. die Probe bleibt trotz der Warmlagerung für 5 Wochen bei 50°C gut fließfähig.

### Beispiel 6

40 Teile C.I. Pigment Gelb 154, 8 Teile Styrylphenyloxethylat, 3 Teile Polyphenoloxalkylat, 7,5 Teile alpha-Methyl-omega-hydroxy-polyethylenglykolether (Mv 470 - 530 g/mol), 0,6 Teile Konservierungsmittel sowie 40,9 Teile entsalztes Wasser werden bei 30 bis 40°C mittels einer Perlmühle (Fa. Drais) mit 280 Teilen Zirkonoxidperlen (d = 1 mm) gemahlen. Anschließend werden die Mahlkörper abgetrennt und die Pigmentpräparation isoliert.

Die Pigmentpräparation hat eine hohe Farbstärke mit sehr reinem Farbton, erweist sich als gut fließfähig und lagerstabil, d.h. die Probe bleibt trotz der Warmlagerung für 5 Wochen bei 50°C gut fließfähig.
Man erzielt eine Abriebbeständigkeit von 760 Doppelbürstenstrichen nach 28 Tagen Trockenzeit, wogegen eine Präparation auf Basis Propylenglykol anstelle von alpha-Methyl-omega-hydroxy-polyethylenglykolether nur 710 Doppelbürstenstrichen, nach 28 Tagen Trockenzeit, standhält.

## Patentansprüche

1. Pigmentdispersion, bestehend im wesentlichen aus
a) mindestens einem organischen oder anorganischen Pigment oder einer Kombination davon,
b) einem alpha-Methyl-omega-hydroxy-polyethylenglykolether mit einer mittleren Molmasse von 250 bis 1000 g/mol,
c) zur Herstellung wässriger Pigmentdispersionen üblichen Dispergatoren,
d) Wasser und
e) gegebenenfalls weiteren üblichen Zusatzstoffen.

2. Pigmentdispersion nach Anspruch 1, bestehend im wesentlichen aus
a) 10 bis 80 Gew.-% mindestens eines organischen oder anorganischen Pigments;
b) 1 bis 50 Gew.-% eines alpha-Methyl-omega-hydroxypolyethylenglykolethers mit einer mittleren Molmasse zwischen 250 und 1000 g/mol;
c) 2 bis 25 Gew.-% eines üblichen Dispergators,
d) 5 bis 80 Gew.-% Wasser;
e) 0 bis 5 Gew.-% üblicher Zusatzstoffe,
wobei die Gewichtsprozente jeweils auf das Gesamtgewicht der Pigmentdispersion bezogen sind.

3. Pigmentdispersion nach Anspruch 1 oder 2, bestehend im wesentlichen aus
a) 20 bis 70 Gew.-% mindestens eines organischen oder anorganischen Pigments;
b) 2 bis 30 Gew.-% eines alpha-Methyl-omega-hydroxypolyethylenglykolethers mit einer mittleren Molmasse zwischen 250 und 1000 g/mol;
c) 3 bis 15 Gew.-% eines üblichen Dispergators,
d) 10 bis 60 Gew.-% Wasser;
e) 0 bis 5 Gew.-% üblicher Zusatzstoffe,
wobei die Gewichtsprozente jeweils auf das Gesamtgewicht der Pigmentdispersion bezogen sind.

4. Pigmentdispersion nach Anspruch 3, **dadurch gekennzeichnet, dass** der alpha-Methyl-omega-hydroxy-polyethylenglykolether in einer Menge von 4 bis 20 Gew.-% enthalten ist.

5. Pigmentdispersion nach einem oder mehreren der Ansprüche 1 bis 4, **dadurch gekennzeichnet, dass** der alpha-Methyl-omega-hydroxy-polyethylenglykolether eine mittlere Molmasse zwischen 400 und 600 g/mol hat.

6. Pigmentdispersion nach einem oder mehreren der Ansprüche 1 bis 5, **dadurch gekennzeichnet, dass** der alpha-Methyl-omega-hydroxy-polyethylenglykolether eine mittlere Molmasse zwischen 470 und 530 g/mol hat.

7. Pigmentdispersion nach einem oder mehreren der Ansprüche 1 bis 6, **dadurch gekennzeichnet, dass** das organische Pigment ein Monoazopigment, Disazopigment, verlacktes Azopigment, Triphenylmethanpigment, Thioindigopigment, Thiazinindigopigment, Perylenpigment, Perinonpigment, Anthanthronpigment, Diketopyrrolopyrrolpigment, Dioxazinpigment, Chinacridonpigment, Phthalocyaninpigment, Isoindolinonpigment, lsoindolinpigment, Benzimidazolonpigment, Naphtholpigment, Chinophthalonpigment, oder ein saurer bis alkalischer Ruß aus der Gruppe Furnaceruße oder Gasruße ist.

8. Verfahren zur Herstellung einer Pigmentdispersion nach einem oder mehreren der Ansprüche 1 bis 7, **dadurch gekennzeichnet, dass** die Komponente (a) in Form von Pulver, Granulat oder wässrigem Presskuchen in Gegenwart von Wasser sowie der Komponenten (b) und (c) dispergiert wird, anschließend gegebenenfalls Wasser (d) und/oder (e) zugemischt und die erhaltene wässrige Pigmentdispersion gegebenenfalls mit Wasser verdünnt wird.

9. Verwendung einer Pigmentdispersion nach einem oder mehreren der Ansprüche 1 bis 7 zum Pigmentieren natürlicher oder synthetischer Materialien.

10. Verwendung nach Anspruch 9 zum Pigmentieren von Anstrich- und Dispersionsfarben, Dispersionslacken, Druckfarben, Tapetenfarben, wasserverdünnbaren Lacken, Wurstdärmen, Saatgut, Glasflaschen, Putze, Holzbeizen, Papiermassen, Buntstiftminen, Faserschreibern, Tuschen, Pasten für Kugelschreiber, Kreiden, Wasch- und Reinigungsmitteln, Schuhpflegemitteln, Latex-Produkten, Schleifmitteln, Kunststoffen, elektrophotographischen Tonern und Entwicklern, Pulverlacken und Inkjet-Tinten.

## Claims

1. A pigment dispersion consisting essentially of
a) at least one organic or inorganic pigment or combination thereof,
b) an alpha-methyl-omega-hydroxy-polyethylene glycol ether having an average molar mass of from 250 to 1000 g/mol,
c) dispersants usual for the preparation of aqueous pigment dispersions,
d) water, and
e) if desired, further, customary additives.

2. A pigment dispersion as claimed in claim 1, consisting essentially of
a) from 10 to 80% by weight of at least one organic or inorganic pigment;
b) from 1 to 50% by weight of an alpha-methyl-omega-hydroxy-polyethylene glycol ether having an average molar mass of between 250 and 1000 g/mol;
c) from 2 to 25% by weight of a usual dispersant,
d) from 5 to 80% by weight of water;
e) from 0 to 5% by weight of customary additives,
the percentages by weight being based in each case on the total weight of the pigment dispersion.

3. A pigment dispersion as claimed in claim 1 or 2, consisting essentially of
a) from 20 to 70% by weight of at least one organic or inorganic pigment;
b) from 2 to 30% by weight of an alpha-methyl-omega-hydroxy-polyethylene glycol ether having an average molar mass of between 250 and 1000 g/mol;
c) from 3 to 15% by weight of a usual dispersant,
d) from 10 to 60% by weight of water;
e) from 0 to 5% by weight of customary additives,
the percentages by weight being based in each case on the total weight of the pigment dispersion.

4. A pigment dispersion as claimed in claim 3, comprising the alpha-methyl-omega-hydroxy-polyethylene glycol ether in an amount of from 4 to 20% by weight.

5. A pigment dispersion as claimed in one or more of claims 1 to 4, wherein the alpha-methyl-omega-hydroxy-polyethylene glycol ether has an average molar mass of between 400 and 600 g/mol.

6. A pigment dispersion as claimed in one or more of claims 1 to 5, wherein the alpha-methyl-omega-hydroxy-polyethylene glycol ether has an average molar mass of between 470 and 530 g/mol.

7. A pigment dispersion as claimed in one or more of claims 1 to 6, wherein the organic pigment is a monoazo pigment, disazo pigment, laked azo pigment, triphenylmethane pigment, thioindigo pigment, thiazineindigo pigment, perylene pigment, perinone pigment, anthanthrone pigment, diketopyrrolopyrrole pigment, dioxazine pigment, quinacridone pigment, phthalocyanine pigment, isoindolinone pigment, isoindoline pigment, benzimidazolone pigment, naphthol pigment or quinophthalone pigment, or an acidic to alkaline carbon black from the furnace black or gas black group.

8. A process for preparing a pigment dispersion as claimed in one or more of claims 1 to 7, which comprises dispersing component (a) in powder, granule or aqueous presscake form in the presence of water and of components (b) and (c), subsequently mixing in, where appropriate, water (d) and/or (e), and, where appropriate, diluting the resulting aqueous pigment dispersion with water.

9. The use of a pigment dispersion as claimed in one or more of claims 1 to 7 for pigmenting natural or synthetic materials.

10. The use as claimed in claim 9 for pigmenting paints, including emulsion paints, dispersion varnishes, printing inks, wallpaper inks, water-thinnable coating materials, sausage casings, seed, glass bottles, plasters, wood stains, paper stocks, colored pencil leads, felttip pens, artist's inks, pastes for ballpoint pens, chalks, detergents and cleaning products, shoecare products, latex products, abrasives, plastics, electrophotographic toners and developers, powder coating materials, and inkjet inks.

## Revendications

1. Dispersion pigmentaire, constituée pour l'essentiel
a) d'au moins un pigment organique ou inorganique, ou d'une combinaison de ceux-ci,
b) d'un alpha-méthyl-oméga-hydroxy-polyéthylène-glycoléther ayant une masse moléculaire moyenne de 250 à 1000 g/mole,
c) de dispersants usuels pour la préparation de dispersions pigmentaires aqueuses,
d) d'eau, et
e) éventuellement d'autres additifs usuels.

2. Dispersion pigmentaire selon la revendication 1, pour l'essentiel constituée
a) de 10 à 80 % en poids d'au moins un pigment organique ou inorganique,
b) de 1 à 50 % en poids d'un alpha-méthyl-oméga-hydroxy-polyéthylèneglycoléther ayant une masse moléculaire moyenne comprise entre 250 et 1000 g/mole,
c) de 2 à 25 % en poids d'un dispersant usuel,
d) de 5 à 80 % en poids d'eau,
e) de 0 à 5 % en poids d'additifs usuels
tous les pourcentages en poids étant rapportés au poids total de la dispersion pigmentaire.

3. Dispersion pigmentaire selon la revendication 1 ou 2, pour l'essentiel constituée
a) de 20 à 70 % en poids d'au moins un pigment organique ou inorganique,
b) de 2 à 30 % en poids d'un alpha-méthyl-oméga-hydroxy-polyéthylèneglycoléther ayant une masse moléculaire moyenne comprise entre 250 et 1000 g/mole,
c) de 3 à 15 % en poids d'un dispersant usuel,
d) de 10 à 60 % en poids d'eau,
e) de 0 à 5 % en poids d'additifs usuels,
tous les pourcentages en poids étant rapportés au poids total de la dispersion pigmentaire.

4. Dispersion pigmentaire selon la revendication 3, **caractérisée en ce que** l'alpha-méthyl-oméga-hydroxy-polyéthylèneglycoléther est présent en une quantité de 4 à 20 % en poids.

5. Dispersion pigmentaire selon l'une ou plusieurs des revendications 1 à 4, **caractérisée en ce que** l'alpha-méthyl-oméga-hydroxy-polyéthylèneglycoléther a une masse moléculaire moyenne comprise entre 400 et 600 g/mole.

6. Dispersion pigmentaire selon l'une ou plusieurs des revendications 1 à 5, **caractérisée en ce que** l'alpha-méthyl-oméga-hydroxy-polyéthylèneglycoléther a une masse moléculaire moyenne comprise entre 470 et 530 g/mole.

7. Dispersion pigmentaire selon l'une ou plusieurs des revendications 1 à 6, **caractérisée en ce que** le pigment organique est un pigment monoazoïque, un pigment disazoique, un pigment azoïque laqué, un pigment de triphénylméthane, un pigment de thioindigo, un pigment de thiazineindigo, un pigment de pérylène, un pigment de périnone, un pigment d'anthanthrone, un pigment de dicétopyrrolopyrrole, un pigment de dioxazine, un pigment de quinacridone, un pigment de phtalocyanine, un pigment d'isoindolinone, un pigment d'isoindoline, un pigment de benzimidazolone, un pigment de naphtol, un pigment de quinophtalone, ou un noir de carbone acide à alcalin choisi dans le groupe comprenant les noirs de four ou les noirs au tunnel.

8. Procédé de préparation d'une dispersion pigmentaire selon l'une ou plusieurs des revendications 1 à 7, **caractérisé en ce que** le composant (a) est, sous forme d'une poudre, d'un granulé ou d'un gâteau de filtration aqueux, dispersé en présence d'eau ainsi que des composants (b) et (c), puis on ajoute éventuellement de l'eau (d) et/ou (e) en mélangeant, et on dilue éventuellement avec de l'eau la dispersion pigmentaire aqueuse obtenue.

9. Utilisation d'une dispersion pigmentaire selon l'une ou plusieurs des revendications 1 à 7 pour pigmenter des matériaux naturels ou synthétiques.

10. Utilisation selon la revendication 9 pour pigmenter des peintures et peintures émulsions, des vernis en dispersion, des encres d'imprimerie, des peintures pour papier peint, des vernis diluables à l'eau, des boyaux pour saucissons, des semences, des bouteilles en verre, des enduits, des produits pour la teinture du bois, des masses de papier, des mines pour crayons de couleur, des crayons feutre, des encres de Chine, des pâtes pour stylos à bille, des craies, des détergents et produits lessiviels, des produits pour l'entretien des chaussures, des produits en latex, des abrasifs, des matières plastiques, des toners et révélateurs électrophotographiques, des peintures en poudre et des encres pour jet d'encre.
